# EUROPÄISCHE PATENTSCHRIFT

(11) **EP 2 053 300 B1**
(45) Veröffentlichungstag und Bekanntmachung des Hinweises auf die Patenterteilung: **29.09.2010**
(21) Anmeldenummer: 08166244.7
(22) Anmeldetag: 09.10.2008
(51) Int. Cl.: F16N 27/02, F16N 27/00, F16N 25/02

(54) **Einleitungsverteiler**
Discharge distributor
Répartiteur d'ouvertures

(30) Priorität: 24.10.2007 DE 202007014818 U
(43) Veröffentlichungstag der Anmeldung: 29.04.2009
(73) Patentinhaber: Baier & Köppel GmbH & Co. KG, 91257 Pegnitz (DE)
(72) Erfinder: Brendel, Jürgen, 91278 Pottenstein (DE)
(74) Vertreter: Zech, Stefan Markus

(56) Entgegenhaltungen:
- DE-A1- 2 638 109
- DE-C- 838 975
- GB-A- 835 127
- GB-A- 939 186
- GB-A- 1 395 351
- US-A- 3 995 717
- US-A- 5 154 259

## Beschreibung

Die Erfindung betrifft einen Einleitungsverteiler, insbesondere ausgebildet und bestimmt für Schmierstoffverteileinrichtungen in Windkraftanlagen, umfassend mindestens einen Schmierstoffeinlass, der mit einer Schmierstoffpumpe fluidisch verbunden und/oder verbindbar ist, insbesondere über eine Schmierstoff-Hauptleitung, mindestens einen Schmierstoffauslass zur Weitergabe einer vordosierten Menge an Schmierstoff an eine Schmierstoftanwendung insbesondere an eine oder mehrere Schmierstellen, sowie einen beweglich gelagerten Steuerkolben mit einem proximalen Ende sowie einem distalen Ende, einen ebenfalls beweglich gelagerten Dosierkolben sowie einen Dosierraum.

Ein Einleitungsverteileinrichtung der vorstehend angegebenen Art ist beispielsweise aus der DE 20 2005 014 797 bekannt. Der dort angegebene Einleitungsverteiler ist jedoch vergleichsweise aufwändig aufgebaut. Sein Vorteil liegt unter anderem darin, dass eine Umkonfigurierung zwischen einem Zustand, in dem der Einleitungsverteiler als Direktschmiersystem arbeitet, und einem Zustand, in dem Einleitungsverteiler als Nachschmiersystem arbeitet, mit einfachen Handgriffen möglich ist. Eine weitere Einleitungsverteileinrichtung ist aus der DE 2 638 109 A bekannt.

Demgegenüber liegt der vorliegenden Erfindung die Aufgabe zugrunde, einen Einleitungsverteiler, insbesondere einen Nachschmierverteiler anzugeben, der einfach aufgebaut ist, sich also durch günstige Herstellkosten sowie hohe Zuverlässigkeit im Betrieb auszeichnet.

Diese Aufgabe wird mit einem Einleitungsverteiler nach den Merkmalen des Anspruches 1 gelöst. Vorteilhafte Weiterbildungen sind in den Unteransprüchen angegeben.

Das Prinzip eines Nachschmierverteilers ist an sich bekannt. Bei Druck in der Schmierstoff-Hauptleitung wird Schmierstoff von der Schmierstoff-Hauptleitung in den Dosierraum befördert, dessen Volumen sich entsprechend erhöht. Dabei wird ein Dosierkolben gegen eine Federkraft bewegt. Bei herkömmlichen Einleitungsverteilern verschließt ein Wechselventil, beispielsweise eine Manschette, während der Schmierstoffzufuhr den Schmierstoffauslass und verhindert damit den Schmierstoffaustritt zur Schmierstelle. Bei Entlastung der Schmierstoff-Hauptleitung, insbesondere nach Beendigung des Pumpenlaufs, wird der Dosierkolben von der Feder zurückbewegt, und das Volumen im Dosierraum verringert sich. Das im Stand der Technik vorgesehene Wechselventil bzw. die Manschette gibt nun den Weg zum Schmierstoffauslass frei und verhindert gleichzeitig den Rückfluss des Schmierstoffs in die Schmierstoff-Hauptleitung. Bei Druckentlastung in der Schmierstoff-Hauptleitung wird somit der im Dosierraum gespeicherte Schmierstoff an den Schmierstoffauslass und damit an die Schmierstelle befördert. Die Schmierung erfolgt somit immer antiparallel zu den Druckphase in der Schmierstoff-Hauptleitung. Im Unterschied zu Direktschmiersystemen wird also nicht in den Druckphasen, sondern in den Entlastungsphasen Schmierstoff an die Schmierstellen abgegeben. In den Druckphasen wird Schmierstoff in dem Dosierraum gefördert und dort gespeichert.

Die vorliegende Erfindung zeichnet sich unter anderem dadurch aus, dass die Funktion der herkömmlicherweise vorgesehenen Manschette bzw. des herkömmlicherweise vorgesehenen wechselventils nun durch den beweglich gelagerten Steuerkolben gewährleistet wird, der - anders als eine Manschette - zuverlässiger arbeitet, mit höheren Drucken sowie unterschiedlicheren Schmierstoffen beaufschlagt werden kann und gleichzeitig verschleißfreier arbeitet.

Das bei Einleitungsverteilern mit Manschetten herkömmlicherweise gelegentlich beobachtete Durchschlagen in der Druckphase wird mit dem hier vorgeschlagenen Aufbau zuverlässig vermieden. Ein weiterer unabhängiger und fakultativer Aspekt liegt auch darin, dass das distale Ende des Steuerkolbens den Schmierstoffauslass in zuverlässiger Weise verschließt.

Konkret ist also vorgesehen, dass in einer ersten Betriebsposition (A) der Steuerkolben mit seinem hinteren Ende den Schmierstoffauslass verschließt und gleichzeitig mit seinem vorderen Ende eine Fluidverbindung zwischen Schmierstoffeinlass und Dosierraum freigibt, wobei in dieser ersten Betriebsposition (A) der in den Dosierraum einströmende Schmierstoff den Dosierkolben gegen die Wirkung einer Feder vorspannt, wobei in einer zweiten Betriebsposition (B) der Steuerkolben den Schmierstoffeinlass mit seinem proximalen Ende verschließt und den Schmierstoffauslass mit seinem distalen Ende freigibt, wobei in dieser zweiten Betriebsposition (B) der Dosierkolben den Schmierstoff durch die Wirkung der Feder aus dem Dosierraum hinausschiebt, so dass die entsprechende Dosiermenge an Schmierstoff aus dem Schmierstoffauslass ausgegeben wird, wobei am Schmierstoffauslass ein axial wirksamer Dichtsitz angeordnet ist, in den das distale Ende des Steuerkolbens eintreten kann, so dass mit zunehmenden Druck des am Schmierstoffeinlass einströmende Schmierstoffs sich die abdichtende kraft des Steuerkolbens auf den Dichtsitz erhöht.

In einer bevorzugten Weiterbildung weist der Steurkolben im Anschluss an sein vorderes Ende eine Dichttfläche an seinem Außenumfang auf, die zur Abdichtung gegen eine Wandung eines zwischen Dosierraum und Schmierstoffauslass vorgesehenen Schmierstoffkanalabschnitts ausgebildet ist. Diese Dichtfläche bewirkt in der Phase der Befüllung des Dosierraums eine zusätzliche Abdichtung und verhindert zusätzlich ein "Durchschlagen" des Einleitungsverteilers, also einen Durchtritt von Schmierstoff in der Befüllungsphase des Dosierraums durch den Schmierstoffauslass.

Gleichzeitig kann in der Förder- bzw. Entleerungsphase (Betriebsposition B) die Dichtfläche eine Abdichtung gegenüber dem Schmierstoffeinlass bewirken und so verhindern, dass beim Hinausschieben des Schmierstoffs aus dem Dosierraum der Schmierstoff an den Schmierstoffeinlass zurückgelangt.

Zur Erzielung einer möglichst guten Dichtwirkung weist die Dichtfläche eine axiale Ausdehnung auf, die deutlich über dem Durchmesser des Steuerkolbens im Bereich der Dichtfläche bemessen ist, vorzugsweise langer als der zwei- oder dreifache Durchmesser des Steuerkolbens bemessen ist. Konkret kann die Dichtfäche beispielsweise eine Länge von über 30 mm, vorzugsweise über 40 mm aufweisen.

In einer weiter bevorzugten Ausgestaltung sind Steuerkolben und Dosierkolben parallel zueinander gelagert. Dies erleichtert nicht nur die Montage des Einleitungsverteilers und seinen Einbau, sondern auch die Herstellung der Kolbenbohrungen, in denen Steuerkolben und Dosierkolben jeweils gelagert sind. Insbesondere wird das vorzugsweise vorzunehmende Honen der beiden Bohrungen hierdurch erheblich vereinfacht.

In einer ebenfalls bevorzugten Ausgestaltung umfasst der Einleitungsverteiler einen vorzugsweise einstückigen Grundkörper, in dem Steuerkolben und Dosierkolben zumindest teilweise aufgenommen sind.

Steuerkolben und/oder Dosierkolben können in axialer Richtung zwei- oder mehrteilig ausgebildet sein, was aus herstellungstechnischen Gründen bevorzugt wird. Selbstverständlich ist es aber auch möglich, Steuerkolben und/oder Dosierkolben jeweils einstückig auszubilden.

In einer konkret bevorzugten Ausgestaltung ist auch am Steuerkolben eine Feder wirksam, die den Steuerkolben in Richtung auf den Schmierstoffeinlass beaufschlagt. Ist die Schmierstoff-Hauptleitung drucklos bzw. liegt der Druck unterhalb der vom Steuerkolben entgegengesetzten Kraft, bleibt der Steuerkolben in Betriebsposition (B), so dass er mit seinem proximalen Ende den Schmierstoffeinlass verschließt. Die am Steuerkolben angreifende Feder garantiert insofern, dass in der Entlastungsphase der Schmierstoff vom Dosierraum über den Schmierstoffkanalabschnitt an den Schmierstoffauslass gelangen und dort austreten kann.

Um in Betriebsposition (B) des Steuerkolbens Schmierstoff am oder im Steuerkolben innerhalb des Schmierstoffkanalabschnitts in Richtung auf den Schmierstoffauslass fördern zu können, weist der Steuerkolben eine Verjüngung, Nuten oder Kanäle in seinem dem Schmierstoffkanalabschnitt zugeordneten Abschnitt auf.

In einer bevorzugten Ausgestaltung sind am oder im Grundkörper zwei Aufsätze befestigt, in denen Steuerkolben und Dosierkolben abschnittsweise aufgenommen sind. Bevorzugtermaßen sind die dem Dosierkolben bzw. Steuerkolben zugeordneten Federn ebenfalls innerhalb der Aufsätze aufgenommen.

Gemäß einer bevorzugten Ausführungsform kann der Dosierkolben an seinem distalen Ende einen Überwachungsstift aufweisen, um die Bewegung des Dosierkolbens optisch und/oder elektronisch überwachen zu können. Bei einer optischen Überwachung kann der Überwachungsstift beispielsweise in einer Durchführung aus dem Aufsatz nach außen geführt sein, so dass das distale Ende des Überwachungsstiftes von außen mit bloßem Auge erkennbar ist und Hubbewegungen nachvollzogen werden können. Hierzu kann das distale Ende des Überwachungsstifts beispielsweise mit einer Markierung, insbesondere Farbmarkierung oder Skala versehen sein.

Alternativ oder zusätzlich ist es auch möglich, dass die Bewegung des Überwachungstiftes elektrisch, beispielsweise über elektrische Kontakte, über eine Veränderung der Induktivität bzw. Kapazität oder auf andere geeignete Weise erfasst und ggf. protokolliert wird.

In einer Weiterbildung der vorliegenden Erfindung kann der Grundkörper noch eine mit dem Dosierraum in Fluidverbindung stehende, verschließbare Befüllöffnung zum anfänglichen Befüllen und/oder Entlüften des Einleitungsverteilers aufweisen. Hierdurch wird eine besonders einfache Befüll- und/oder Entlüftungsmöglichkeit geschaffen.

Nach einem weiteren bevorzugten Aspekt der vorliegenden Erfindung kann der Einleitungsverteiler in Scheibenbauweise ausgestaltet sein und so den Anschluss eines gleichartigen Einleitungsverteilers zur Ausbildung einer modular ausgebauten Anordnung gestatten.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert.

Hierbei zeigen:
- Fig. 1: eine Schnittansicht einer Ausführungsform des erfindungsgemäßen Einleitungsverteilers
- Fig. 2a bis 2d: den Einleitungsverteiler nach Fig. 1 in verschiedenen Betriebszuständen
- Fig. 3: eine modulare Anordnung umfassend eine Mehrzahl von Einleitungs- verteilern gemäß der Ausführungsform nach Fig. 1
- Fig. 4: eine Schnittansicht einer mehrere Einleitungsverteiler 10 nach der vorliegenden Erfindung umfassenden Anordnung.

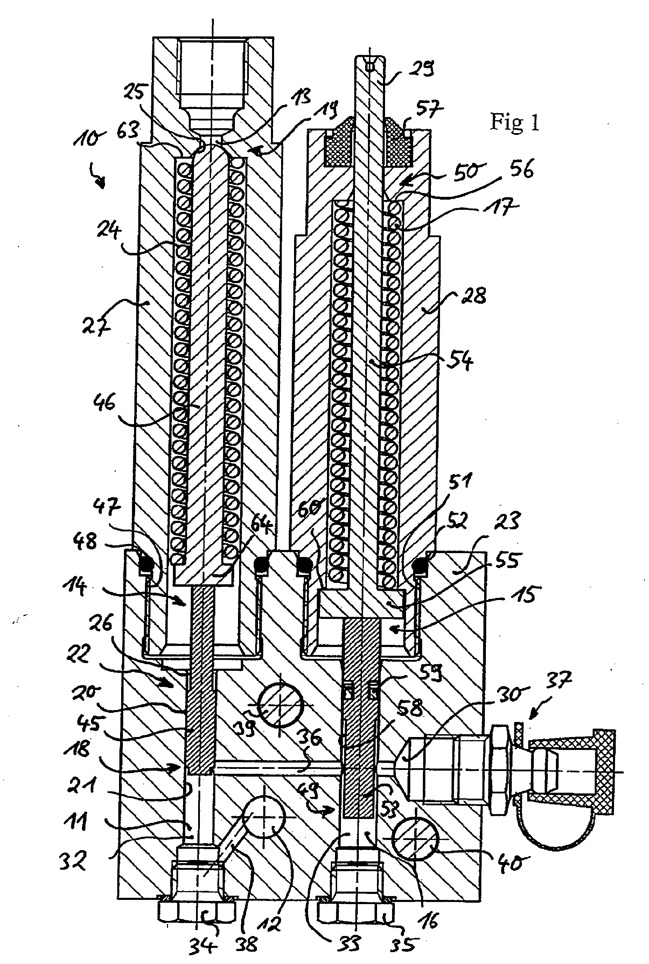

In Fig. 1 ist eine Ausführungsform eines erfindungsgemäßen Einleitungsverteilers 10 dargestellt. Der Einleitungsverteiler nach Fig. 1 umfasst einen zumindest im Wesentlichen quaderförmigen Grundkörper 23, der eine durchgehende erste Kolbenbohrung 32 sowie eine ebenfalls durchgehende zweite Kolbenbohrung 33 aufweist. Erste Kolbenbohrung 32 und zweite Kolbenbohrung 33 verlaufen parallel zueinander und sind jeweils an einem Ende über Verschlusskappen 34, 35 fluiddicht verschlossen. Im Wesentlichen rechtwinklig zur ersten Kolbenbohrung 32 sowie zweiten Kolbenbohrung 33 ist eine Verbindungsbohrung 36 vorgesehen, die die zweite Kolbenbohrung 33 durchtritt und in der ersten Kolbenbohrung 32 endet. Die Verbindungsbohrung 36 schafft somit eine Verbindung zwischen erster Kolbenbohrung 32 und zweiter Kolbenbohrung 33.

Nach außen hin definiert diese Verbindungsbohrung 36 eine verschließbare Befüllöffnung 30, die ein anfängliches Befüllen und/oder Entlüften des Einleitungsverteilers gestattet und im normalen Betrieb über eine Verschlusseinrichtung 37, wie eine Verschlusskappe oder ein federbelastetes Rückschlagventil verschlossen ist. Gleichzeitig kann die Befüllöffnung 30 auch für eine Abschmierung von Hand (Handschmierung) als Befüllöffnung dienen.

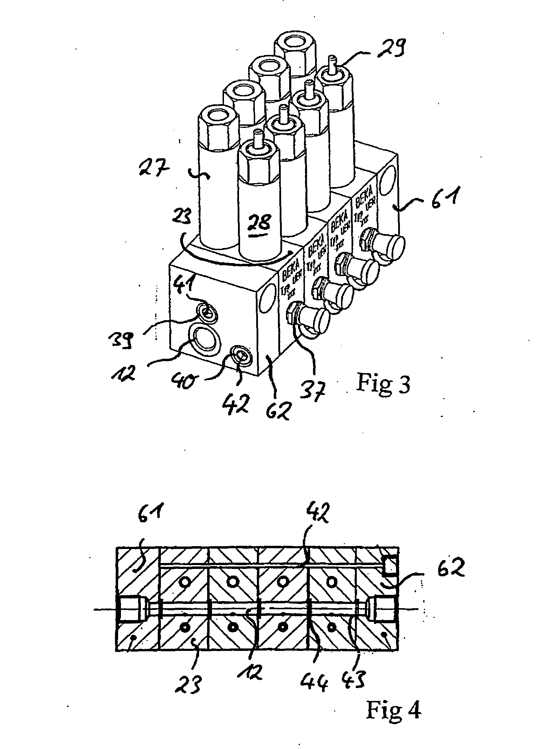

Die erste Kolbenbohrung 32 steht über einen Zuführkanal 38 mit einer Schmierstoff-Hauptleitung 12, die sich orthogonal zu einer aus den Achsen von erster Kolbenbohrung 32 und zweiter Kolbenbohrung 33 definierten Ebene erstreckt, in Fluidverbindung. Ebenfalls senkrecht zu dieser durch die Achsen von erster Kolbenbohrung 32 und zweiter Kolbenbohrung 32 definierten Ebene stehen Montagebohrungen 39, 40, die ein Zusammenfügen mehrerer Grundkörper 23 und damit mehrerer gleichartiger Einleitungsverteiler 10 wie in Fig. 3 veranschaulicht gestatten. Hierzu werden die einzelnen Einleitungsverteiler 10 so nebeneinander gesetzt, dass ihre jeweiligen Montagebohrungen 39, 40 miteinander fluchten und mit einer jeweils gemeinsamen Verbindungsschraube 41, 42 gegeneinander festgelegt werden können. Bei der hier konkret vorgeschlagenen Ausführungsform ist auch die Schmierstoff-Hauptleitung 12 geradlinig, also parallel zu den Montagebohrungen 39, 40 verlaufend ausgebildet und setzt sich aus den Bohrungen der Schmierstoff-Hauptleitung 12 der einzelnen Grundkörper 23 zusammen, wobei eine Dichtung an den Dichtstellen jeweils durch in eine entsprechende Nut 43 eingesetzte O-Ringe 44 (vgl. Fig. 4) bewirkt wird.

In die erste Kolbenbohrung 32 innerhalb des Grundkörpers 23 ist ein Steuerkolben 14 eingesetzt, der ein einem Schmierstoffeinlass 11 zugewandtes proximales Ende 18 sowie ein einem Schmierstoffauslass 13 zugewandtes distales Ende 19 umfasst. Der Steuerkolben 14 ist in der vorliegenden Ausführungsform zweiteilig ausgebildet und umfasst ein Steuerelement 45 sowie ein Betätigungselement 46. Konkret taucht in der vorliegenden Ausführungsform nur das Steuerelement 45 in die erste Kolbenbohrung 32 innerhalb des Grundkörpers 23 ein. Das Betätigungselement 46 ist dagegen in einem Aufsatz 27 aufgenommen, der in einer zur ersten Kolbenbohrung 32 fluchtenden Einschrauböffnung 47 befestigt ist. Eine Abdichtung zwischen Aufsatz 27 und Grundkörper 23 wird in an sich bekannter Weiser über einen O-Ring 48 bewirkt.

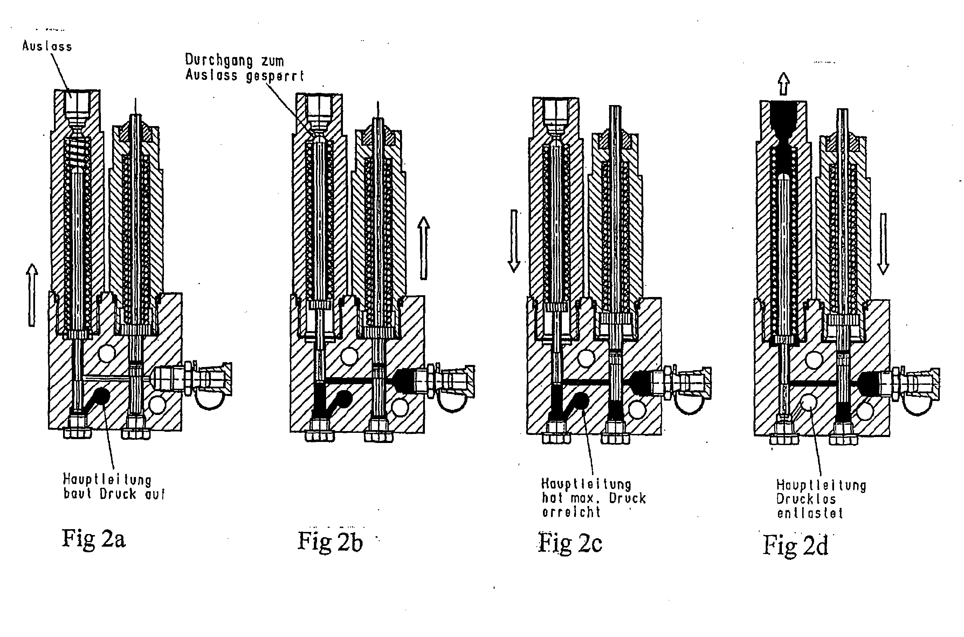

Um das Betätigungselement 46 des Steuerkolbens 14 herum ist eine Feder 24 angeordnet, die zwischen einer Schulter 63 innerhalb des Aufsatzes 27 und einer T-förmigen Erweiterung 64 am Betätigungselement 46 wirksam ist. Die Feder 24 bewirkt, dass der Steuerkolben 14 bei Abwesenheit weiterer Kräfte in die erste Kolbenbohrung 32 hineingeschoben wird. Am distalen Ende 19 des Steuerkolbens 14, also bei der vorliegenden Ausführungsform am dem Steuerelement 45 abgewandten Ende des Betätigungselements 46 liegt eine frontseitige, hier kugelabschnittsförmig ausgebildete Fläche des Betätigungselements 46 in einem Dichtsitz 25 innerhalb des Aufsatzes 27 an. Durch das im Dichtsitz 25 anliegende Betätigungselement 46 wird ein Schmierstoffauslass 13 verschlossen. Wird der Steuerkolben 14 jedoch durch die Wirkung der Feder 24 in die erste Kolbenbohrung 32 hineingeschoben, so wird, was noch eingehender unter Bezugnahme auf die in den Fig. 2a bis 2d veranschaulichten Betriebszustände erläutert werden wird, der Schmierstoffauslass 13 freigegeben.

In der zweiten Kolbenbohrung 33 ist ein Dosierkolben 15 mit einem proximalen Ende 49 aufgenommen. Ein distales Ende 50 des Dosierkolbens 15 ist hingegen in einem Aufsatz 28, der über eine Einschrauböffnung 51 am Grundkörper 23 befestigt ist, aufgenommen. Zwischen Aufsatz 28 und Grundkörper 23 ist aus Abdichtungsgründen in an sich bekannter Weise ein O-Ring 52 vorgesehen. Zwischen der Verschlusskappe 35 und dem Dosierkolben 15 ist ein Dosierraum 16 ausgebildet, dessen Volumen bei Verschieben des Dosierkolbens 15 in Richtung auf die Verschlusskappe 35 verkleinert werden kann. Auch der Dosierkolben 15 ist in der vorliegenden Ausführungsform zweigeteilt ausgebildet, so dass er an seinem proximalen Ende 49 ein Dosierelement 53 und an seinem distalen Ende 50 ein Betätigungselement 54 umfasst. Das Betätigungselement 54 des Dosierkolbens 15 weist an seinem dem Dosierelement 53 zugewandten Ende eine in etwa T-förmige Erweiterung 55 auf. Zwischen dieser T-förmigen Erweiterung 55 des Betätigungselements 54 und einer Schulter 56 innerhalb des Aufsatzes 28 ist eine Feder 17 wirksam, die den Dosierkolben 15 bei Abwesenheit weiterer Kräfte in die zweite Kolbenbohrung 33 hineindrückt.

Das Betätigungselement 54 des Dosierkolbens 15 bildet an seinem dem Betätigungselement 54 abgewandten Ende einen Überwachungsstift 29 aus, der in einer Durchführung 57 durch den Aufsatz 28 hindurch nach außen geführt ist. Der Überwachungstift 29 gestattet eine optische Überwachung, insbesondere eine Überwachung mit bloßem Auge, dahingehend, dass der Dosierkolben 15 Hubbewegungen ausführt.

Das Steuerelement 45 des Steuerkolbens 14 weist an seinem proximalen Ende, also dem dem Betätigungselement 46 abgewandten Ende, eine sich über seinen Umfang, also an seiner Mantelfläche ausgebildete Dichtfläche 20 mit einer gewissen axialen Ausdehnung auf. Diese axiale Ausdehnung liegt vorzugsweise über dem Durchmesser des Steuerelements 45 in diesem Bereich, bzw. vorzugsweise über 20 mm, weiter vorzugsweise sogar über 30 mm. Über die Dichtfläche 20 bewirkt das Steuerelement 45 des Steuerkolbens 14 eine Abdichtung gegenüber der Wandung 21 der ersten Kolbenbohrung 32. In dem Abschnitt zwischen dieser Dichtfläche 20 und dem Betätigungselement 46 weist das Steuerelement 45 eine Verjüngung 26 auf, die einen Schmierstofftransport zwischen der Wandung der ersten Kolbenbohrung 32 und dem Steuerelement 45 im Bereich dieser Verjüngung 26 zulässt. Der Abschnitt der ersten Kolbenbohrung 32 zwischen Verbindungsbohrung 36 und Einschrauböffnung 47 definiert einen Schmierstoffkanalabschnitt 22, in dem bei Verschiebung der Dichtfläche 20 aus diesem Schmierstoffkanalabschnitt 22 hin auf den Schmierstoffeinlass 11 Schmierstoff in Richtung auf den Schmierstoffauslass 13 gefördert werden kann.

Das in der zweiten Kolbenbohrung 33 gelagerte Dosierelement 53 weist an seinem proximalen, das heißt dem Betätigungselement 54 abgewandten Ende eine Verjüngung 58 auf, so dass ein Schmierstofftransport zwischen der Wandung der zweiten Kolbenbohrung 33 und dem Dosierelement 53 im Bereich dieser Verjüngung 48 möglich ist. In einem Bereich zwischen dieser Verjüngung 48 und dem Betätigungselement 54 weist das Dosierelement 53 eine Abdichteinrichtung 59 auf, die gegen die Wandung der zweiten Kolbenbohrung 33 abdichtet. Eine derartige Abdichteinrichtung 59 kann durch eine in eine umlaufende Nut am Betätigungselement 54 eingelegte Dichtung gebildet sein.

Die Funktionsweise des Einleitungsverteilers 10 nach Fig. 1 wird anhand verschiedener Betriebszustände unter Bezugnahme auf die Figuren 2a bis 2d nachfolgend erläutert.

In Fig. 2a ist die Ausführungsform des hier vorgeschlagenen Einleitungsverteilers in einem Zustand dargestellt, in dem der Steuerkolben 14 in Richtung auf den Schmierstoffauslass 13 bewegt wird. Hierbei baut sich über die Schmierstoff-Hauptleitung 12 Schmierstoffdruck aus, so dass Schmierstoff über den Zuführkanal 38 in die erste Kolbenbohrung 32 eintritt, das distale Ende 19 des Steuerkolben 14 beaufschlagt und der Steuerkolben 14 vom Schmierstoffeinlass 11 weg in Richtung auf den Schmierstoffauslass 13 geschoben wird. Der Schmierstoffauslass 13 wird somit versperrt. Hierbei ist das Steuerelement 45 so bemessen, dass, sobald der Steuerkolben mit seinem Betätigungselement 46 im Dichtsitz 25 des Aufsatzes 27 in Anlage kommt, die Verbindungsbohrung 36 hin zur zweiten Kolbenbohrung 33 freigegeben ist. Der unter Druck stehende Schmierstoff gelangt über die Verbindungsbohrung 36 in die zweite Kolbenbohrung 33 und kann dort entlang der Verjüngung 48 am Dosierelement 53 in den Dosierraum 16 eintreten.

Unter Vergrößerung des Volumens des Dosierraums 16 durch den eintretenden Schmierstoff wird (vgl. Fig. 2b) nunmehr der Dosierkolben 15 verschoben und zwar in die gleiche Richtung wie der bereits zuvor verschobene Steuerkolben 14, das heißt in der Richtung vom Grundkörper 23 hin zum Aufsatz 28, bis die T-förmige Erweiterung 55 am Betätigungselement 54 des Dosierkolbens 15 mit einer Begrenzungsschulter 60 innerhalb des Aufsatzes 28 in Anlage kommt. Der Dosierraum 16 ist dann komplett mit der jeweils vorbestimmten Menge an Schmierstoff befüllt. Selbst bei Anhalten der Druckphase in der Schmierstoff-Hauptleitung 12 kann kein weiterer Schmierstoff im Dosierraum 16 aufgenommen werden (vgl. Fig. 2c).

Fällt nun der Druck in der Schmierstoff-Hauptleitung 12 ab (vgl. Fig. 2d), so wird der Steuerkolben 14 über die am Betätigungselement 46 angreifende Feder 24 wieder in Richtung auf den Grundkörper 23 verschoben, dergestalt, dass das Steuerelement 45 in Richtung auf den Schmierstoffeinlass 11 verschoben wird und den Schmierstoffeinlass 11 verschließt. Sobald die Dichtfläche 20, die im druckbelasteten Zustand ein direktes Durchschlagen des Einleitungsverteilers verhindert, also verhindert, dass Schmierstoff in der Druckphase direkt in Richtung auf den Schmierstoffauslass 13 gelangen kann, die Verbindungsbohrung 36 passiert hat, also zwischen Schmierstoffeinlass 11 und Verbindungsbohrung 36 in Ruhestellung gelangt, wird über die Verjüngung 26 ein Schmierstoffweg ausgehend vom Dosierraum 16 über die Verbindungsbohrung 36 und den Schmierstoffkanalabschnitt 22 freigeben. Da nun der Schmierstoffeinlass 11 druckfrei ist, kann aufgrund der Wirkung der Feder 17 der Schmierstoff durch den Dosierkolben 15, konkret durch das in den Dosierraum 13 eintretende Dosierelement 53, über die Verbindungsbohrung 36 und den Schmierstoffkanalabschnitt 22, der zwischen Verbindungsbohrung 36 und Aufsatz 27 innerhalb der ersten Kolbenbohrung 32 definiert ist, in Richtung auf den Schmierstoffauslass 13, der durch den verschobenen Steuerkolben 14 nun freigegeben ist, ausgeschoben werden.

In Fig. 3 ist nochmals eine Anordnung bestehend aus vier Einleitungsverteilern 10, die über die Montagebohrungen 39, 40 und entsprechende Verbindungsschrauben 41, 42 mit zwei seitlichen Endteilen 61, 62 zu einer modular aufgebauten Anordnung zusammengefügt sind, veranschaulicht.

In Fig. 4 ist eine Schnittansicht durch eine derartige modular aufgebaute Anordnung dargestellt, wobei hier die Schmierstoff-Hauptleitung 12 parallel zur Montagebohrung 40 bzw. der dort eingesetzten Verbindungsschraube 42 verläuft und an den Verbindungsflächen mit den in entsprechenden Nuten 43 eingelegten O-Ringen 44 abgedichtet ist.

Mit dem hier vorgeschlagenen Einleitungsverteiler wird eine besonders einfache, herstellungstechnisch günstige und zuverlässige Anordnung vorgeschlagen, die beispielsweise bei der Abschmierung von Windkraftanlagen Verwendung finden kann, keinesfalls jedoch auf derartige Anwendungen beschränkt ist.

### Bezugszeichenliste

- 10: Einleitungsverteiler
- 11: Schmierstoffeinlass
- 12: Schmierstoff-Hauptleitung
- 13: Schmierstoffauslass
- 14: Steuerkolben
- 15: Dosierkolben
- 16: Dosierraum
- 17: Feder
- 18: Proximales Ende (Steuerkolben)
- 19: Distales Ende (Steuerkolben)
- 20: Dichtfläche
- 21: Wandung
- 22: Schmierstoffkanalabschnitt
- 23: Grundkörper
- 24: Feder (Steuerkolben)
- 25: Dichtsitz
- 26: Verjüngung
- 27,28: Aufsätze
- 29: Überwachungsstift
- 30: Befüllöffnung
- 32: erste Kolbenbohrung
- 33: zweite Kolbenbohrung
- 34, 35: Verschlusskappen
- 36: Verbindungsbohrung
- 37: Verschlusseinrichtung
- 38: Zuführkanal
- 39, 40: Montagebohrungen
- 41, 42: Verbindungsschraube
- 43: Nut (O-Ringe)
- 44: O-Ring
- 45: Steuerelement
- 46: Betätigungselement
- 47: Einschrauböffnung
- 48: O-Ring
- 49: Proximales Ende (Dosierkolben)
- 50: distales Ende (Dosierkolben)
- 51: Einschrauböffnung
- 52: O-Ring
- 53: Dosierelement
- 54: Betätigungselement
- 55: T-förmige Erweiterung
- 56: Schulter (Aufsatz)
- 57: Durchführung
- 58: Verjüngung
- 59: Abdichteinrichtung
- 60: Begrenzungsschulter (Befüllöffnung)
- 61, 62: Endteile
- 63: Schulter (Aufsatz)
- 64: T-förmige Erweiterung

## Patentansprüche

1. Einleitungsverteiler (10), insbesondere ausgebildet und bestimmt für Schmierstoffverteileinrichtungen in Windkraftanlagen, umfassend
a) mindestens einen Schmierstoffeinlass (11), der mit einer Schmierstoffpumpe fluidisch verbunden und/oder verbindbar ist, insbesondere über eine Schmierstoff-Hauptleitung (12),
b) mindestens einen Schmierstoffauslass (13) zur Weitergabe einer vordosierten Menge an Schmierstoff an eine Schmierstoffanwendung, insbesondere an eine oder mehrere Schmierstellen,
c) einen beweglich gelagerten Steuerkolben (14) mit einem proximalen Ende (18) sowie einem distalen Ende (19), einem ebenfalls beweglich gelagerten Dosierkolben (15) sowie einen Dosierraum (16),
d) wobei in einer ersten Betriebsposition (A) der Steuerkolben (14) mit seinem distalen Ende (19) den Schmierstoffauslass (13) verschließt und gleichzeitig mit seinem proximalen Ende (18) eine Fluidverbindung zwischen Schmierstoffeinlass (11) und Dosierraum (16) freigibt,
e) wobei in dieser ersten Betriebsposition (A) der in den Dosierraum (16) einströmende Schmierstoff den Dosierkolben (15) gegen die Wirkung einer Feder (17) vorspannt,
f) wobei in einer zweiten Betriebsposition (B) der Steuerkolben (14) den Schmierstoffeinlass (11) mit seinem proximalen Ende (18) verschließt und den Schmierstoffauslass (13) mit seinem distalen Ende (19) freigibt,
g) wobei in dieser zweiten Betriebsposition (B) der Dosierkolben (15) den Schmierstoff durch die Wirkung der Feder (17) aus dem Dosierraum (16) hinausschiebt, so dass die entsprechende Dosiermenge an Schmierstoff aus dem Schmierstoffauslass (13) ausgegeben wird
**dadurch gekennzeichnet,**
**dass** am Schmierstoffauslass (13) ein axial wirksamer Dichtsitz (25) angeordnet ist, in den das distale Ende (19) des Steuerkolbens (14) eintreten kann, so dass mit zunehmendem Druck des am Schmierstoffeinlass (11) einströmenden Schmierstoffs sich die abdichtende Kraft des Steuerkolbens (14) auf den Dichtsitz (25) erhöht.

2. Einleitungsverteiler nach Anspruch 1,
**dadurch gekennzeichnet,**
**dass** der Steuerkolben (14) im Anschluss an sein proximales Ende (18) eine Dichtfläche (20) an seinem Außenumfang aufweist, die zur Abdichtung gegen eine Wandung (21) eines zwischen Dosierraum (16) und Schmierstoffauslass (13) vorgesehenen Schmierstoffkanalabschnitts (22) ausgebildet ist.

3. Einleitungsverteiler nach Anspruch 2,
**dadurch gekennzeichnet,**
**dass** die Dichtfläche (20) eine axiale Ausdehnung aufweist, die deutlich über dem Durchmesser des Steuerkolbens (14) im Bereich der Dichtfläche (20) bemessen ist.

4. Einleitungsverteiler nach einem der Ansprüche 1 bis 3,
**dadurch gekennzeichnet,**
**dass** Steuerkolben (14) und Dosierkolben (15) parallel zueinander gelagert sind.

5. Einleitungsverteiler nach einem der Ansprüche 1 bis 4,
**dadurch gekennzeichnet,**
**dass** der Einleitungsverteiler (10) einen vorzugsweise einstückigen Grundkörper (23) umfasst, in dem Steuerkolben (14) und Dosierkolben (15) zumindest teilweise aufgenommen sind.

6. Einleitungsverteiler nach einem der Ansprüche 1 bis 5,
**dadurch gekennzeichnet,**
**dass** der Steuerkolben (14) und/oder der Dosierkolben (15) jeweils in axialer Richtung zwei- oder mehrteilig ausgebildet sind.

7. Einleitungsverteiler nach einem der Ansprüche 1 bis 6,
**dadurch gekennzeichnet,**
**dass** auch am Steuerkolben (14) eine Feder (24) wirksam ist, die den Steuerkolben (14) in Richtung auf den Schmierstoffeinlass (11) beaufschlagt.

8. Einleitungsverteiler nach einem der Ansprüche 2 bis 7,
**dadurch gekennzeichnet,**
**dass** der Steuerkolben (14) eine Verjüngung (26), Nuten oder Kanäle an der dem proximalen Ende (18) abgewandten Seite der Dichtfläche (20) aufweist, um Schmierstoff in der Betriebsposition (B) des Steuerkolbens (14) durch den Schmierstoffkanalabschnitt (22) zu transportieren.

9. Einleitungsverteiler nach einem der Ansprüche 5 bis 8,
**dadurch gekennzeichnet,**
**dass** am oder im Grundkörper (23) zwei Aufsätze (27, 28) befestigt sind, in denen jeweils Steuerkolben (14) und Dosierkolben (15) abschnittsweise aufgenommen sind.

10. Einleitungsverteiler nach einem der Ansprüche 1 bis 9,
**dadurch gekennzeichnet,**
**dass** der Dosierkolben (15) an seinem distalen Ende (50) einen Überwachungsstift (29) aufweist, um die Hubbewegung des Dosierkolbens (15) optisch und/oder elektronisch überwachen zu können.

11. Einleitungsverteiler nach einem der Ansprüche 5 bis 10,
**dadurch gekennzeichnet,**
**dass** der Grundkörper (23) eine mit dem Dosierraum (16) in Fluidverbindung stehende, verschließbare Befüllöffnung (30) zum anfänglichen Befüllen und/oder Entlüften des Einleitungsverteilers (10) aufweist.

12. Einleitungsverteiler nach einem der Ansprüche 1 bis 11,
**dadurch gekennzeichnet,**
**dass** er in Scheibenbauweise ausgestaltet ist und den Anschluss eines gleichartigen Einleitungsverteilers zur Ausbildung einer modular aufgebauten Anordnung gestattet.

## Claims

1. A single-line distributor (10), in particular configured and intended for lubricant distributing means in wind energy plants, comprising
a) at least one lubricant inlet (11) fluidically connected and/or connectable to a lubricant pump, in particular via a lubricant main line (12),
b) at least one lubricant outlet (13) for transferring a predosed quantity of lubricant to a lubricant application, in particular to one or more lubricating sites,
c) a movably supported control piston (14) having a proximal end (18) and a distal end (19), a likewise movably supported dosing piston (15), and a dosing space (16),
d) wherein the control piston (14) in a first operating position (A) closes the lubricant outlet (13) by means of its distal end (19) and clears at the same time a fluid connection between the lubricant inlet (11) and the dosing space (16) by means of its proximal end (18),
e) wherein in said first operating position (A) the lubricant flowing into the dosing space (16) preloads the dosing piston (15) against the action of a spring (17),
f) wherein in a second operating position (B) the control piston (14) closes the lubricant inlet (11) by means of its proximal end (18) and clears the lubricant outlet (13) by means of its distal end (19),
g) wherein in said second operating position (B) the dosing piston (15) pushes the lubricant out of the dosing space (16) by the action of the spring (17) so that the corresponding dosed quantity of lubricant is discharged from the lubricant outlet (13),
**characterized in that**, at the lubricant outlet (13), an axially active sealing seat (25) is arranged, into which the distal end (19) of the control piston (14) may enter so that at increasing pressure of the lubricant flowing in at the lubricant inlet (11), the sealing force of the control piston (14) acting upon the sealing seat (25) is increased.

2. The single-line distributor according to claim 1,
**characterized in that**
the control piston (14) has a sealing face (20) at its outer circumference adjacent to its proximal end (18), which sealing face is configured to seal against a wall (21) of a lubricant duct portion (22) provided between the dosing space (16) and the lubricant outlet (13).

3. The single-line distributor according to claim 2,
**characterized in that**
the sealing face (20) comprises an axial extension which is dimensioned to be distinctly greater than the diameter of the control piston (14) in the area of the sealing face (20).

4. The single-line distributor according to any one of claims 1 to 3,
**characterized in that**
the control piston (14) and the dosing piston (15) are supported to be parallel to each other.

5. The single-line distributor according to any one of claims 1 to 4,
**characterized in that**
the single-line distributor (10) comprises a preferably single-part base body (23) in which the control piston (14) and the dosing piston (15) are received at least in part.

6. The single-line distributor according to any one of claims 1 to 5,
**characterized in that**
the control piston (14) and/or dosing piston (15) each are formed to be two-part or multipart in the axial direction.

7. The single-line distributor according to any one of claims 1 to 6,
**characterized in that**
a spring (24) is also active at the control piston (14) which acts upon the control piston (14) in the direction toward the lubricant inlet (11).

8. The single-line distributor according to any one of claims 2 to 7,
**characterized in that**
the control piston (14) has a tapering (26), grooves or ducts on the side of the sealing face (20) facing away from the proximal end (18) so as to convey lubricant in the operating position (B) of the control piston (14) through the lubricant duct portion (22).

9. The single-line distributor according to any one of claims 5 to 8,
**characterized in that**
two top parts (27, 28) are attached on or in the base body (23), in each of which the control piston (14) and dosing piston (15) are received in part.

10. The single-line distributor according to any one of claims 1 to 9,
**characterized in that**
the dosing piston (15) comprises a monitoring pin (29) at its distal end (50) so as to be able to monitor the movement of the dosing piston (15) optically and/or electronically.

11. The single-line distributor according to any one of claims 5 to 10,
**characterized in that**
the base body (23) has a filling opening (30) which can be closed and is in fluid communication with the dosing space (16) for the initial filling and/or venting of the single-line distributor (10).

12. The single-line distributor according to any one of claims 1 to 11,
**characterized in that**
it is configured in disc construction and permits the connection of a similar single-line distributor for forming an arrangement of modular construction.

## Revendications

1. Distributeur à ligne simple (10), en particulier constitué pour les dispositifs de distribution de lubrifiant dans les installations éoliennes et destiné à ceux-ci, comportant
a) au moins une entrée de lubrifiant (11) qui est fluidiquement reliée et/ou reliable à une pompe à lubrifiant, en particulier via une conduite principale de lubrifiant (12),
b) au moins une sortie de lubrifiant (13) destinée à transmettre une quantité prédosée de lubrifiant à une application de lubrifiant, en particulier à un ou plusieurs points de lubrification,
c) un piston de commande (14) monté de façon mobile présentant une extrémité proximale (18) ainsi qu'une extrémité distale (19), un piston de dosage (15) également monté de façon mobile ainsi qu'un compartiment de dosage (16),
d) sachant que, dans une première position de fonctionnement (A), le piston de commande (14) obture la sortie de lubrifiant (13) avec son extrémité distale (19) et libère en même temps une liaison fluidique entre l'entrée de lubrifiant (11) et le compartiment de dosage (16) avec son extrémité proximale (18),
e) sachant que, dans cette première position de fonctionnement (A), le lubrifiant qui s'écoule dans le compartiment de dosage (16) précontraint le piston de dosage (15) contre l'effet d'un ressort (17),
f) sachant que, dans une deuxième position de fonctionnement (B), le piston de commande (14) obture l'entrée de lubrifiant (11) avec son extrémité proximale (18) et libère la sortie de lubrifiant (13) avec son extrémité distale (19),
g) sachant que, dans cette deuxième position de fonctionnement (B), le piston de dosage (15) chasse le lubrifiant du compartiment de dosage (16) sous l'effet du ressort (17) de sorte que la quantité de dosage correspondante de lubrifiant est extraite de la sortie de lubrifiant (13),
**caractérisé en ce que**
un siège d'étanchéité à action axiale (25) est disposé à la sortie de lubrifiant (13), dans lequel l'extrémité distale (19) du piston de commande (14) peut s'engager de sorte que la force étanchéifiante du piston de commande (14) sur le siège d'étanchéité (25) s'accroisse à mesure que la pression du lubrifiant qui s'écoule dans l'entrée de lubrifiant (11) augmente.

2. Distributeur à ligne simple selon la revendication 1,
**caractérisé en ce que**
le piston de commande (14) présente à la jonction de son extrémité proximale (18) une surface d'étanchéité (20) sur sa circonférence extérieure, qui est constituée pour assurer l'étanchéité contre une cloison (21) d'une section de canal de lubrifiant (22) prévue entre le compartiment de dosage (16) et la sortie de lubrifiant (13).

3. Distributeur à ligne simple selon la revendication 2,
**caractérisé en ce que**
la surface d'étanchéité (20) présente une extension axiale qui est dimensionnée bien au-delà du diamètre du piston de commande (14) dans la zone de la surface d'étanchéité (20).

4. Distributeur à ligne simple selon l'une des revendications 1 à 3,
**caractérisé en ce que**
le piston de commande (14) et le piston de dosage (15) sont montés parallèlement l'un à l'autre.

5. Distributeur à ligne simple selon l'une des revendications 1 à 4,
**caractérisé en ce que**
le distributeur à ligne simple (10) comporte un corps de base (23) de préférence monobloc dans lequel le piston de commande (14) et le piston de dosage (15) sont logés au moins en partie.

6. Distributeur à ligne simple selon l'une des revendications 1 à 5,
**caractérisé en ce que**
le piston de commande (14) et/ou le piston de dosage (15) sont chacun constitués de deux ou plusieurs parties en sens axial.

7. Distributeur à ligne simple selon l'une des revendications 1 à 6,
**caractérisé en ce que**
un ressort (24) agit également sur le piston de commande (14), en exerçant une pression sur le piston de commande (14) en direction de l'entrée de lubrifiant (11).

8. Distributeur à ligne simple selon l'une des revendications 2 à 7,
**caractérisé en ce que**
le piston de commande (14) présente un amincissement (26), des rainures ou des canaux sur la surface d'étanchéité (20) tournée du côté opposé à l'extrémité proximale (18) pour transporter du lubrifiant par la section de canal de lubrifiant (22) dans la position de fonctionnement (B) du piston de commande (14).

9. Distributeur à ligne simple selon l'une des revendications 5 à 8,
**caractérisé en ce que**
deux rehausses (27, 28) dans lesquelles le piston de commande (14) et le piston de dosage (15) sont respectivement logés en partie, sont fixées sur ou dans le corps de base (23).

10. Distributeur à ligne simple selon l'une des revendications 1 à 9,
**caractérisé en ce que**
le piston de dosage (15) présente une goupille de surveillance (29) à son extrémité distale (50) pour pouvoir surveiller optiquement et/ou électroniquement le mouvement de va-et-vient du piston de dosage (15).

11. Distributeur à ligne simple selon l'une des revendications 5 à 10,
**caractérisé en ce que**
le corps de base (23) présente une ouverture de remplissage (30) obturable, en liaison fluidique avec le compartiment de dosage (16), pour le remplissage initial et/ou la purge d'air du distributeur à ligne simple (10).

12. Distributeur à ligne simple selon l'une des revendications 1 à 11,
**caractérisé en ce que**
il est constitué selon un type de construction à plaque et autorise le raccordement d'un distributeur à ligne simple de même nature pour constituer un ensemble monté de façon modulaire.
